# FASCICULE DE BREVET EUROPEEN

(11) **EP 0 671 795 B1**
(45) Date de publication et mention de la délivrance du brevet: **09.12.1998**
(21) Numéro de dépôt: 95410011.1
(22) Date de dépôt: 17.02.1995
(51) Int. Cl.: H02B 7/06

(54) **Poste électrique de transformation**
Transformatorenstation
Transformer substation

(30) Priorité: 08.03.1994 FR 9402743
(43) Date de publication de la demande: 13.09.1995
(73) Titulaire: SCHNEIDER ELECTRIC SA, 92100 Boulogne Billancourt (FR)
(72) Inventeur: Fulchiron, Didier, F-38050 Grenoble Cedex 09 (FR)
(74) Mandataire: Hecké, Gérard

(56) Documents cités:
- EP-A- 0 209 027
- EP-A- 0 343 356
- DE-U- 9 202 421
- AEG MITTEILUNGEN, vol. 48, no. 2/3, Mars 1958, pages 71 - 74 KLAUS DÖRFER 'Netzstationen im Stadtgebiet mit unterirdischem Transformator'
- AEG MITTEILUNGEN, vol. 49, no. 6/7, Juillet 1959 pages 274-277, K. DÖRFER 'Netztransformatorstationen'
- ELEKTRO-TECHNIK, vol. 35, no. 16, 25 Avril 1952 pages 62-63, RUDOLF LEMME 'Neue Bauformen für Netzstationen'

## Description

L'invention est relative à un poste électrique de transformation pour l'extérieur ayant une cabine réalisée en une enveloppe de béton, et subdivisée en un premier compartiment enterré de logement d'un transformateur, et un deuxième compartiment en surélévation par rapport au sol renfermant un premier et/ou un deuxième tableaux électriques, ladite cabine étant recouverte par un toit et équipée de moyens d'aération autorisant une circulation d'air de refroidissement à l'intérieur des compartiments, le premier compartiment comportant une première partie occupée par le transformateur, et recouverte par un trottoir démontable faisant partie intégrante de la cabine, ledit trottoir se trouvant dans un plan horizontal au voisinage du niveau du sol en étant séparé du toit par un décalage vertical correspondant à la hauteur hors-sol du poste, le deuxième compartiment étant agencé au-dessus d'une deuxième partie du premier compartiment, laquelle est réservée au passage des câbles de raccordement traversant des orifices dans la paroi enterrée de la cabine.

Le document FR-A-2.073.003 fait connaître un poste de transformation pour l'extérieur reposant sur un élément creux de fondation enfoui dans le sol. Les tableaux électriques à haute tension et à basse tension sont juxtaposés avec le transformateur dans la cabine située hors-sol.

Les documents FR-A-2.341.972 et DE-A-2.513.513 se rapportent à des postes de transformations semi-enterrés avec raccordement souterrain, ayant chacun un fond placé sous le niveau du sol et formant un plancher de support du transformateur et des tableaux . Les tableaux et le transformateur sont situés côte à côte, et leurs parties supérieures respectives se trouvent hors-sol.

Selon le document DE-A-2.512.846, il est nécessaire de faire usage d'un regard spécial de ventilation au niveau du sol pour assurer la circulation d'air de refroidissement à l'intérieur du poste de transformation semi-enterré.

Le document EP-209.027 décrit un poste de transformation semi-enterré, ayant une plaque de recouvrement située au-dessus du transformateur. L'accès au tableau électrique s'effectue du côté opposé à la plaque, par un mouvement de basculement du toit.

L'ensemble de ces dispositifs connus présentent des problèmes d'encombrement, étant donné que leurs installations nécessitent des surfaces au sol relativement importantes. L'impact visuel de tels postes encombrants ne favorise pas leur intégration dans l'environnement d'une zone urbaine ou suburbaine.

Le but de l'invention consiste à réduire l'encombrement d'un poste de transformation, et à améliorer l'accès au tableau électrique.

Le poste de transformation selon l'invention est caractérisé en ce que :
- le trottoir est situé au droit d'une porte d'accès au deuxième compartiment,
- des moyens de support des tableaux s'étendent dans la direction longitudinale du trottoir à la base du deuxième compartiment, en reposant sur des entretoises fixes solidaires des faces latérales opposées de la cabine,
- et une poutre longitudinale s'étend parallèlement aux moyens de supports le long du bord intérieur du trottoir pour constituer un moyen de retenue de la porte et des dalles démontables du trottoir.

L'encombrement est ainsi réduit au minimum étant donné que la partie en élévation abritant les différents appareillages des tableaux électriques occupe une surface de valeur inférieure à celle de la partie souterraine, dans laquelle se trouve le transformateur et les câbles de raccordement. L'extractibilité du transformateur reste possible grâce à la présence du trottoir démontable. L'accessibilité aux faces avant des tableaux est facilitée par une porte disposée au droit du trottoir.

L'aération du poste s'opère au moyen d'ouvertures ménagées dans la partie surélevée de la cabine à l'opposé de la porte.

Le fond plat du premier compartiment enterré de la cabine se trouve au même niveau dans les première et deuxième parties.

D'autres avantages ressortiront plus clairement de la description qui va suivre d'un mode de réalisation de l'invention donné à titre d'exemple non limitatif, et représenté aux dessins annexés, dans lesquels :

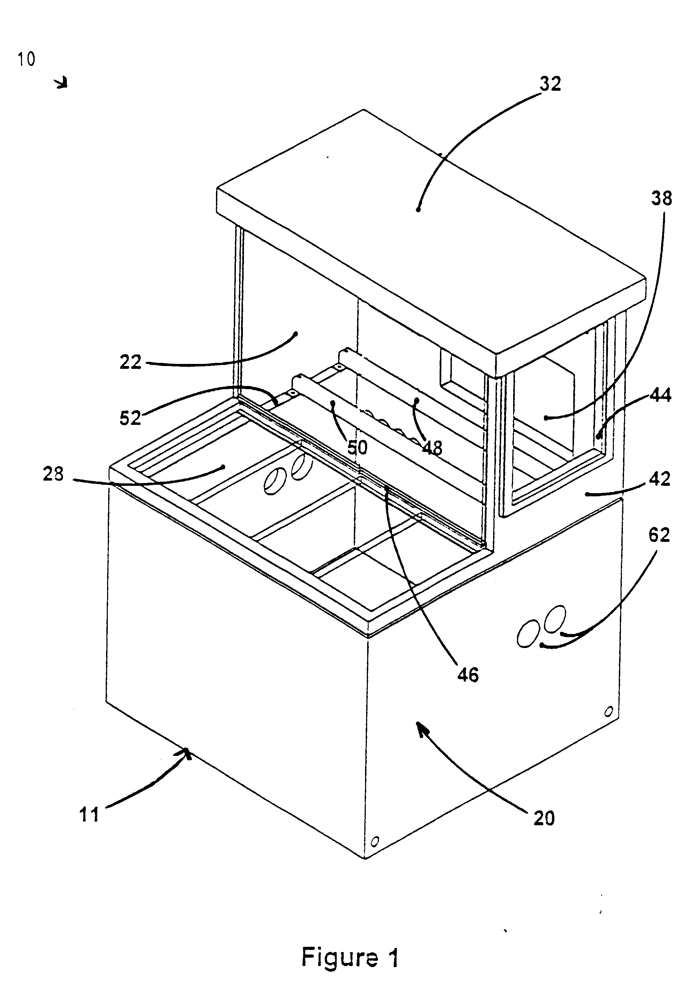

La figure 1 est une vue schématique en perspective de la cabine vide d'un poste de transformation conforme à l'invention.

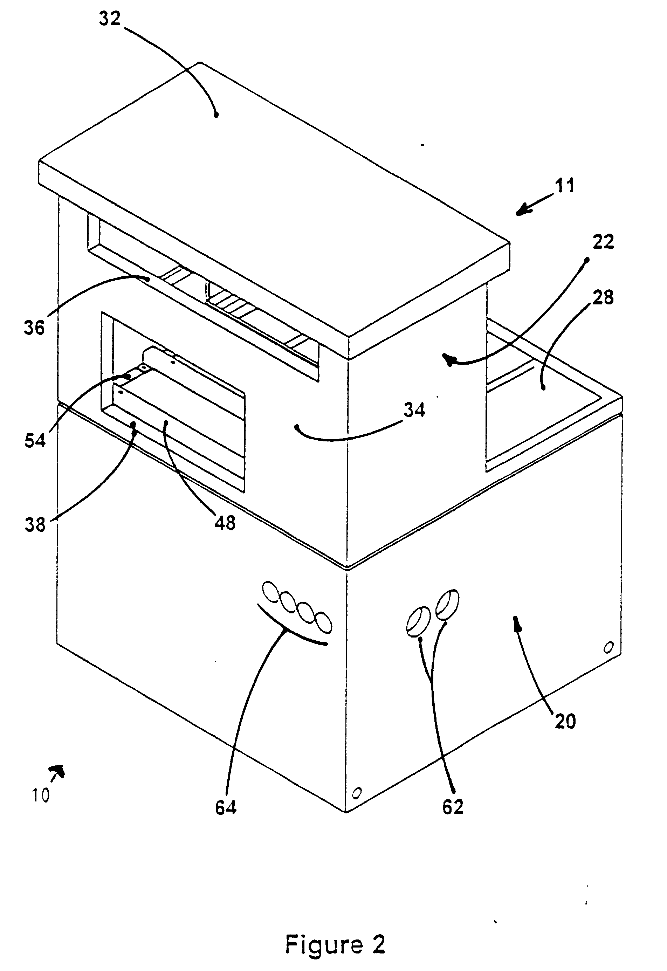

La figure 2 montre un vue arrière du poste de la figure 1.

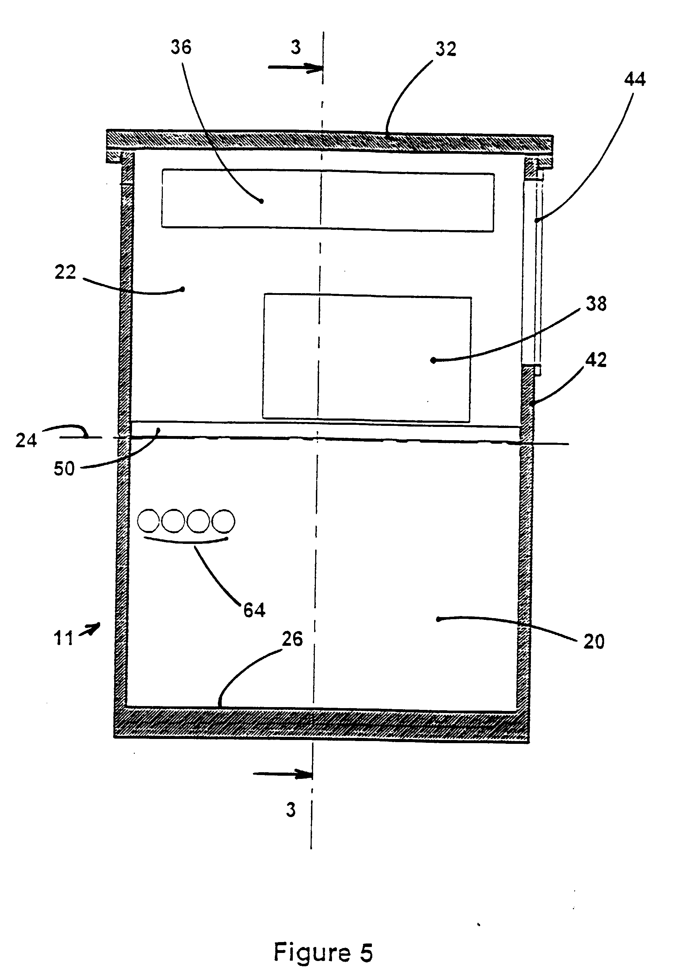

La figure 3 est une vue en coupe de la cabine, suivant la ligne 3-3 de la figure 5.

La figure 4 représente une vue identique de la figure 3 après incorporation du transformateur et des tableaux.

La figure 5 est une vue en coupe suivant la ligne 5-5 de la figure 3.

La figure 6 montre une vue identique de la figure 5 montrant la cabine avec les tableaux.

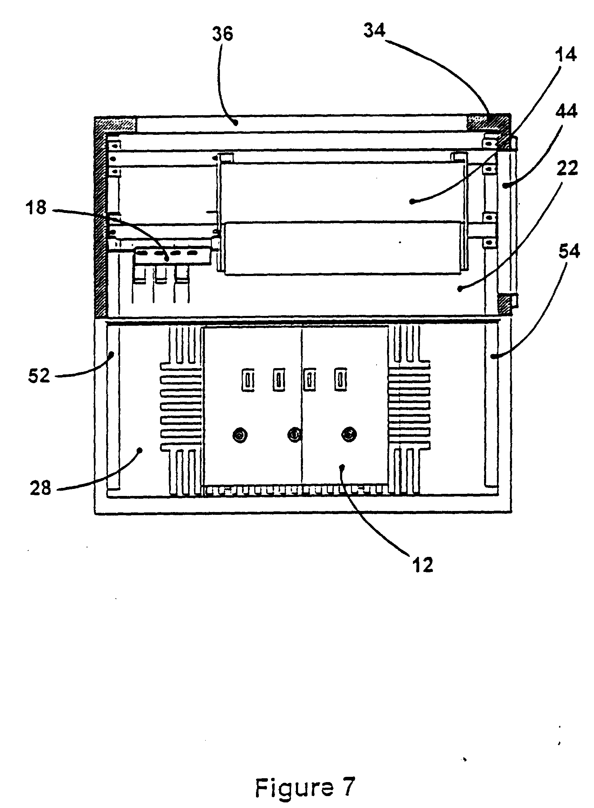

La figure 7 est une vue en coupe suivant la ligne 7-7 de la figure 6.

Sur les figures, un poste de transformation 10 semi-enterré comporte une cabine 11 formée par une enveloppe en béton, et renfermant un transformateur 12 à moyenne tension/basse tension, un premier tableau 14 électrique à moyenne tension, et un deuxième tableau 16 électrique à basse tension associé à un interrupteur 18 de commande. La cabine 11 est subdivisée en deux compartiments 20, 22 superposés comprenant un premier compartiment 20 enterré de logement du transformateur 12, et un deuxième compartiment 22 en élévation agencé au-dessus du niveau du sol 24, et abritant les différents appareillages des premier et deuxième tableaux électriques 14, 16.

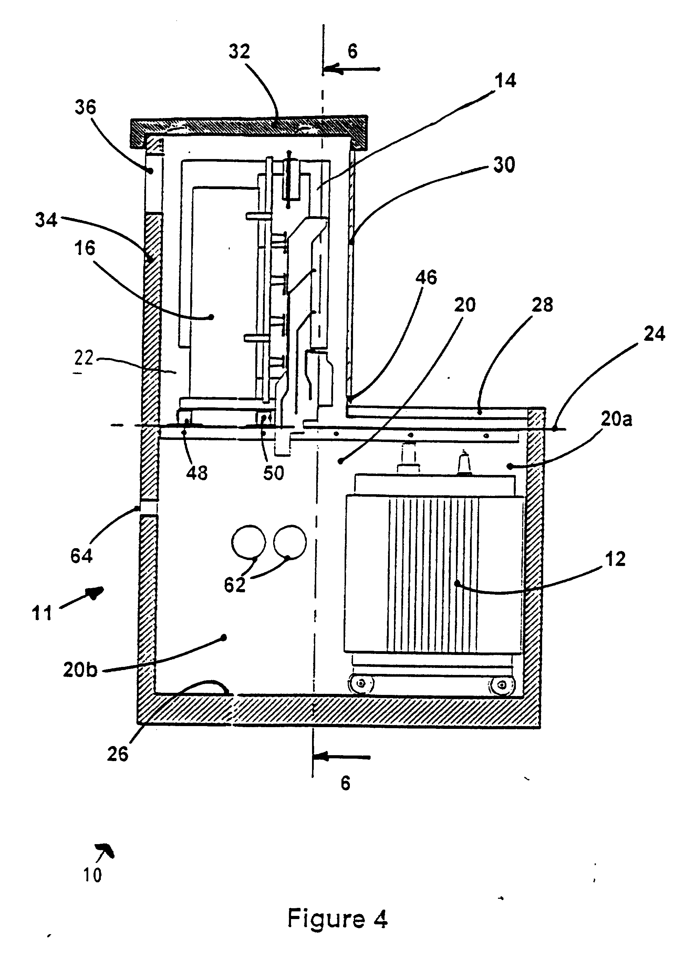

Le premier compartiment 20 est totalement enterré, et présente un fond 26 plat de section horizontale supérieure à la base du deuxième compartiment 22 en élévation. Le transformateur 12 est placé en-dessous du niveau du sol 24 en étant posé sur le fond 26 de la cabine 11. Dans l'exemple représenté à la figure 4, la profondeur d'enterrement du premier compartiment 20 est supérieure à la hauteur de la partie visible hors terre du deuxième compartiment 22, laquelle est de l'ordre de 1,2m à 1,5m.

Le premier compartiment 20 enfoui dans la terre est accessible par un trottoir 28 démontable faisant partie intégrante de l'enveloppe de la cabine 11, et autorisant le raccordement électrique du poste 10, ainsi que le montage ou remplacement éventuel du transformateur 12.

Le trottoir 28 horizontal à dalles démontables se trouve légèrement en surélévation par rapport au niveau du sol 24, et est placé directement au-dessus du transformateur 12 au droit d'une porte 30 d'accès aux faces avant des tableaux 14, 16 électriques du deuxième compartiment 22. Le transformateur 12 occupe une première partie 20a du premier compartiment 20, la deuxième partie 20b restante située sous le deuxième compartiment 22 et représenté à gauche sur la figure 4, étant réservée au passage des câbles de raccordement.

Un toit 32 recouvre en totalité le deuxième compartiment 22 en s'étendant parallèlement au trottoir 28 avec un décalage vertical correspondant à la hauteur hors sol du poste 10. La paroi postérieure 34 disposée à l'opposé de la porte 30 est équipée d'une paire d'ouvertures 36, 38 de ventilation de formes rectangulaires ménagées respectivement à la partie supérieure et à la partie inférieure du deuxième compartiment 22. Dans un battant de la porte 30 peut être découpée une première fenêtre destinée à recevoir un coffret (non représenté) de contrôle et commande des tableaux 14, 16.

L'une des petites faces latérales 42 du deuxième compartiment 22 est dotée d'une deuxième fenêtre 44 rectangulaire à laquelle peut être associé depuis l'extérieur un coffret auxiliaire, notamment d'éclairage public, ou d'équipement de télécommunication, ou autres.

Une première poutre 46 longitudinale s'étend le long du bord intérieur du trottoir 28 et sert de moyen de support pour les dalles, et la porte 30. Deux autres poutres 48, 50 parallèles se trouvant sensiblement dans le même plan que la première poutre 46 constituent un châssis de support des deux tableaux 14, 16, les deux poutres 48, 50 prenant appui sur deux entretoises 52, 54 solidaires des faces latérales opposées de la cabine 11.

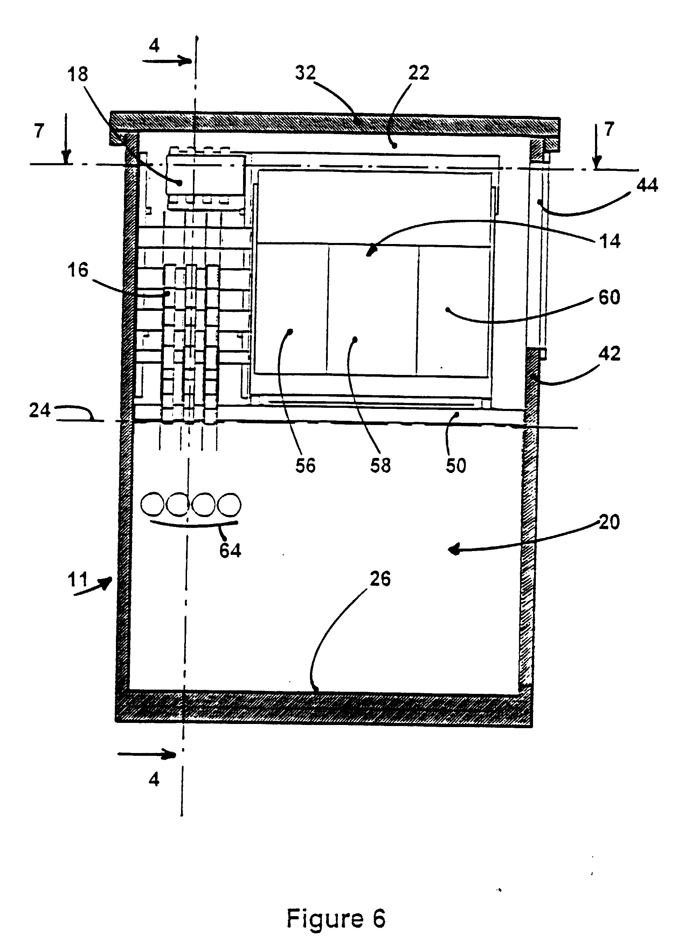

Le premier tableau 14 à moyenne tension comporte à titre d'exemple trois cellules 56, 58, 60 (figure 6) juxtaposées le long des poutres 46, 48, 50 et comprenant deux cellules d'arrivée 56, 60 et une cellule de protection 58 du transformateur 12. Un exemple de réalisation d'un tel tableau est décrit dans le brevet français 2.507.835 de la demanderesse. Les câbles moyenne tension enterrés pénètrent dans le premier compartiment 20 par des orifices 62 de la cabine 11, et sont raccordés électriquement aux deux cellules d'arrivée 56, 60. Les câbles de départ du deuxième tableau basse tension 16 sortent également du poste 10 en souterrain après avoir traversé la paroi du compartiment 20 par une autre série d'orifices 64. A l'intérieur du poste 10, l'enroulement primaire du transformateur 12 est connecté électriquement par des câbles à moyenne tension à la cellule de protection 58, et l'enroulement secondaire est relié par des câbles à basse tension à l'interrupteur 18 du deuxième tableau à basse tension 16. Le fond du deuxième compartiment 22 est ouvert de manière à communiquer avec le premier compartiment 20.

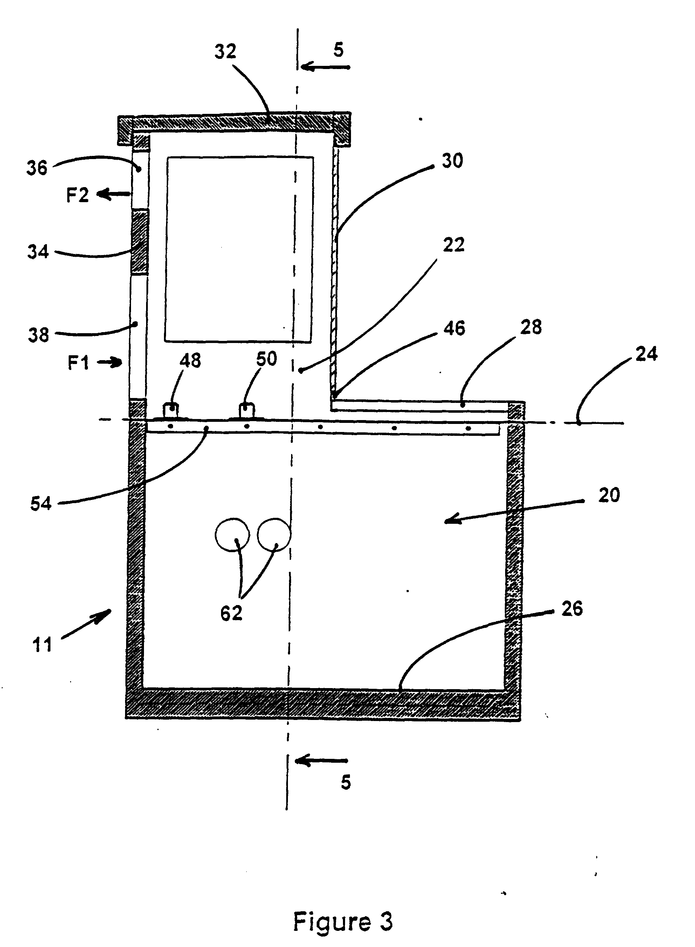

La ventilation interne des deux compartiments 20, 22 du poste 10 s'effectue à travers les deux ouvertures 36, 38 de la paroi latérale 34 en élévation. L'entrée d'air frais indiquée par la flèche F1 sur la figure 3, intervient par l'ouverture inférieure 38 située légèrement au-dessus du niveau du sol 24. L'air descend vers le compartiment 20 enterré de manière à assurer le refroidissement du transformateur 12, et s'échappe par la suite à travers l'ouverture supérieure 36 grâce à une circulation naturelle par effet thermique. Des grilles d'aération sont rapportées sur les deux ouvertures 36, 38.

Après l'installation et le raccordement électrique du poste 10, les différents accès nécessaires à l'exploitation des tableaux électriques 14, 16 s'opèrent à hauteur d'homme au niveau du compartiment 22 aérien. Le transformateur 12 reste parfaitement accessible après enlèvement des dalles du trottoir 28, autorisant un mouvement vertical d'extraction vers le haut en vue d'un échange éventuel du transformateur 12.

L'architecture interne de la cabine 11 présente une surface au sol réduite (par exemple moins de 2m²) et une faible hauteur hors sol (moins de 1,5m). Un tel encombrement est particulièrement adapté à un poste de transformation public, et à son intégration dans l'environnement d'une zone urbaine ou suburbaine.

## Revendications

1. Poste électrique de transformation pour l'extérieur ayant une cabine (11) réalisée en une enveloppe de béton, et subdivisée en un premier compartiment (20) enterré de logement d'un transformateur (12), et un deuxième compartiment (22) en surélévation par rapport au sol (24) renfermant un premier et/ou un deuxième tableaux électriques (14, 16), ladite cabine (11) étant recouverte par un toit (32) et équipée de moyens d'aération autorisant une circulation d'air de refroidissement à l'intérieur des compartiments (20, 22), le premier compartiment (20) comportant une première partie (20a) occupée par le transformateur (12), et recouverte par un trottoir (28) démontable faisant partie intégrante de la cabine (11), ledit trottoir se trouvant dans un plan horizontal au voisinage du niveau du sol (24) en étant séparé du toit (32) par un décalage vertical correspondant à la hauteur hors-sol du poste (10), le deuxième compartiment (22) étant agencé au-dessus d'une deuxième partie (20b) du premier compartiment (20), laquelle est réservée au passage des câbles de raccordement traversant des orifices (62, 64) dans la paroi enterrée de la cabine (11),
caractérisé en ce que :
- le trottoir (28) est situé au droit d'une porte (30) d'accès au deuxième compartiment (22),
- des moyens de support (48, 50) des tableaux (14, 16) s'étendent dans la direction longitudinale du trottoir (28) à la base du deuxième compartiment (22), en reposant sur des entretoises fixes (52, 54) solidaires des faces latérales opposées de la cabine (11),
- et une poutre (46) longitudinale s'étend parallèlement aux moyens de supports (48, 50) le long du bord intérieur du trottoir (28) pour constituer un moyen de retenue de la porte (30) et des dalles démontables du trottoir (28).

2. Poste électrique de transformation selon la revendication 1, caractérisé en ce que le toit (32) recouvre en totalité le deuxième compartiment (22), et que les moyens d'aération sont formés par des ouvertures (36, 38) ménagées dans la portion surélevée de la cabine (11) à l'opposé de la porte (30).

3. Poste électrique de transformation selon la revendication 1, caractérisé en ce que le fond plat du premier compartiment (20) enterré se trouve au même niveau dans les première et deuxième parties (20a, 20b).

## Patentansprüche

1. Freiluft-Umspannstation mit einer als Betongehäuse ausgebildeten Kabine (11), die in ein erstes, ins Erdreich versenktes Abteil (20) zur Aufnahme eines Transformators (12) sowie in ein aus dem Erdreich (24) herausstehendes, eine erste und/oder zweite elektrische Schaltanlage (14, 16) enthaltendes zweites Abteil (22) unterteilt ist, wobei die genannte Kabine (11) durch ein Dach (32) abgedeckt ist und Lüftungsmittel umfaßt, die eine Kühlluftzirkulation im Innern der Abteile (20, 22) ermöglichen, das erste Abteil (20) einen, vom Transformator (12) eingenommenen und von einer, als Bestandteil der Kabine (11) ausgebildeten, herausnehmbaren Bedienungsplattform (28) abgedeckten, ersten Bereich (20a) umfaßt, die genannte Bedienungsplattform in einer horizontalen Ebene etwa auf Erdreichniveau (24) angeordnet ist und einen vertikalen Abstand zum Dach (32) aufweist, der der Höhe der Station (10) über Erdreich entspricht, und das zweite Abteil (22) über einem zweiten Bereich (20b) des ersten Abteils (20) angeordnet ist, der zur Durchflihrung der Anschlußkabel dient, welche durch in der versenkten Wand der Kabine (11) ausgebildete Öflhungen (62, 64) hindurchgeführt werden.
dadurch gekennzeichnet, daß
- die Bedienungsplattform (28) rechtwinklig zu einer Zugangstür (30) zum zweiten Abteil (22) angeordnet ist,
- die Tragmittel (48, 50) der Schaltanlagen (14, 16) längs der Bedienungsplattform (28) an der Unterseite des zweiten Abteils (22) angeordnet sind und auf ortsfesten, mit den einander gegenüberliegenden Seitenwänden der Kabine (11) fest verbundenen Stützböcken (52, 54) aufliegen
- und ein Längsträger (46) parallel zu den Tragmitteln (48, 50), längs des unteren Rands der Bedienungsplattform (28) angeordnet ist, um ein Haltemittel für die Tür (30) und die herausnehmbaren Platten der Bedienungsplattform (28) zu bilden.

2. Umspannstation nach Anspruch 1, dadurch gekennzeichnet, daß das Dach (32) das zweite Abteil (22) vollständig überdeckt und die Lüftungsmittel als Öffnungen (34, 36) ausgebildet sind, die in dem, aus dem Erdreich herausstehenden Teil der Kabine (11) auf der der Tür (30) gegenüberliegenden Seite eingebracht sind.

3. Umspannstation nach Anspruch 1, dadurch gekennzeichnet, daß der ebene Boden des ersten versenkten Abteils (20) auf dem gleichen Niveau liegt wie der erste und zweite Bereich (20a, 20b).

## Claims

1. An outdoor electrical transformer substation having a cubicle (11) made of a concrete enclosure and subdivided into a first underground compartment (20) housing a transformer (12) and a second compartment (22) raised with respect to ground level (24) containing a first and/or second electrical switchboard (14, 16), said cubicle (11) being covered by a roof (32) and equipped with ventilating means enabling cooling air to circulate inside the compartments (20, 22), the first compartment (20) comprising a first part (20a) occupied by the transformer (12) and covered by a removable walkway (28) forming an integral part of the cubicle (11), said walkway being located in a horizontal plane close to ground level (24) and being separated from the roof (32) by a vertical distance corresponding to the above-ground height of the substation (10), the second compartment (22) being arranged above a second part (20b) of the first compartment (20), which part is reserved for passage of the connecting cables passing through openings (62, 64) in the underground wall of the cubicle (11),
characterized in that:
- the walkway (28) is located facing a door (30) for access to the second compartment (22),
- support means (48, 50) for supporting the switchboards (14, 16) extend in the longitudinal direction of the walkway (28) at the base of the second compartment (22), resting on fixed spacers (52, 54) securedly affixed to the opposite side faces of the cubicle (11),
- and a longitudinal girder (46) extends parallel to the support means (48, 50) along the inside edge of the walkway (28) to form a means of securing the door (30) and the removable slabs of the walkway (28).

2. The electrical transformer substation according to claim 1, characterized in that the roof (32) totally covers the second compartment (22), and that the ventilating means are formed by openings (36, 38) arranged in the raised portion of the cubicle (11) opposite from the door (30).

3. The electrical transformer substation according to claim 1, characterized in that the flat base of the underground first compartment (20) is located at the same level in the first and second parts (20a, 20b).
